# EUROPÄISCHE PATENTSCHRIFT

(11) **EP 0 994 754 B1**
(45) Veröffentlichungstag und Bekanntmachung des Hinweises auf die Patenterteilung: **21.06.2006**
(21) Anmeldenummer: 98941291.1
(22) Anmeldetag: 06.07.1998
(51) Int. Cl.: B05B 15/12, B60S 3/04, B60S 3/00

(54) **VERFAHREN ZUR HERSTELLUNG EINER FAHRZEUGKAROSSERIE UND VORRICHTUNG ZUR DURCHFÜHRUNG DES VERFAHRENS**
METHOD FOR PRODUCING A VEHICLE BODY, AND A DEVICE FOR CARRYING OUT THE METHOD
PROCEDE DE PRODUCTION DE CARROSSERIES DE VEHICULES ET DISPOSITIF DE MISE EN OEUVRE DUDIT PROCEDE

(30) Priorität: 18.07.1997 DE 19730886
(43) Veröffentlichungstag der Anmeldung: 26.04.2000
(73) Patentinhaber: AUDI AG, 85045 Ingolstadt (DE)
(72) Erfinder: SIEGRIST, Gerhard, D-85051 Ingolstadt (DE); KLIMKEWITZ, Otmar, D-85055 Ingolstadt (DE); MÜLLER, Christian, D-85055 Ingolstadt (DE); REITZER, Xaver, D-85134 Stammham (DE); STROBL, Christoph, D-85049 Ingolstadt (DE); KNÖDLER, Stefan, D-85080 Gaimersheim (DE); PUBLIK, Josef, D-85123 Karlskron (DE); RINDFLEISCH, Ludwig, D-85055 Ingolstadt (DE); MERGL, Anton, D-85055 Ingolstadt (DE); HIRSCHBECK, Manfred, D-85111 Adelschlag (DE); HUBER, Frank, D-85049 Ingolstadt (DE); KUBICEK, Horst, D-85057 Ingolstadt (DE); ARNOLD, Hans-Dieter, D-85139 Wettstetten (DE); SCHARREISZ, Johannes, D-85055 Ingolstadt (DE)
(74) Vertreter: Geissler, Manfred
(86) Internationale Anmeldenummer: PCT/EP1998/004161
(87) Internationale Veröffentlichungsnummer: WO 1999/003594

(56) Entgegenhaltungen:
- DE-A- 3 046 849
- DE-A- 4 014 493
- DE-A- 4 143 251
- DE-A- 4 416 649
- FR-A- 2 439 626
- GB-A- 2 299 770
- US-A- 5 033 489
- US-A- 5 524 329
- PATENT ABSTRACTS OF JAPAN vol. 7, no. 237 (M-250), 21. Oktober 1983 & JP 58 126239 A (NITSUSAN), 27. Juli 1983

## Beschreibung

Die Erfindung betrifft ein Verfahren zur Herstellung einer Fahrzeugkarosserie nach dem Oberbegriff des Anspruchs 1 und eine Vorrichtung zur Durchführung des Verfahrens nach dem Oberbegriff des Anspruchs 6.

In allgemein bekannter Weise werden Fahrzeugkarosserien in einem Verfahrensschritt in einer Rohbauanlage als Rohkarosserien hergestellt. In einem weiteren Verfahrensschritt werden solche Rohkarosserien einer Lackieranlage zugeführt und dort lackiert.

Rohkarosserien aus der Rohbauanlage sind regelmäßig verunreinigt beispielsweise durch Ölfilme und Staub. Solche Verunreinigungen werden nachteilig in die Lackieranlage eingetragen, wo sie dortige Reinigungssysteme insbesondere eingangsseitige Entfettungssysteme verschmutzen.

Aus der Rohbauanlage kommen zudem auch Rohkarosserien mit Oberflächenfehlern, wobei diese nach einer Lackierung von einem Kunden als qualitätsmindernde Fehler erkannt würden. Vor der Lackieranlage werden daher Rohkarosserien auf Oberflächenfehler der Karosserieaußenhaut hin inspiziert. Dies erfolgt derzeit durch Prüfpersonen. Es bestehen auch Bestrebungen, eine Oberflächenfehlererkennung zu automatisieren. Erkannte Oberflächenfehler werden beispielsweise durch Schleifen nachgearbeitet. Die dabei entstehenden Verschmutzungen werden ebenfalls nachteilig in die Lackieranlage eingetragen.

Außenhautfehler sind jedoch an den teilweise verschmutzten und matten Oberflächen der Rohkarossen sowohl durch Tasten als auch durch eine visuelle Inspektion nur schwer erkennbar. Daher durchlaufen solche Karosserien mit Oberflächenfehlern zumindest teilweise den Lackierprozess. Wenn solche Fehler nach dem Lackieren, z. B. nach einer Grundlackierung festgestellt werden, sind sie nur noch mit großem Aufwand zu beseitigen.

Es ist bereits eine Anlage zur Spritzvorbehandlung von Werkstücken für eine nachfolgende Lackierbehandlung oder Pulverbeschichtung bekannt (DE 43 33 932 A1). Diese Anlage weist einen Tunnel, durch den die Werkstücke transportierbar sind, und mehrere Bäder zur Aufnahme von Behandlungsflüssigkeiten auf, wobei ein oberes, offenes Endes eines Bades mit dem Tunnel derart in Verbindung steht, dass Flüssigkeit vom Tunnel in das Bad abfließen kann. Die Seitenwände von Tunnel und Bad bilden eine Baueinheit, wobei die Bäder von den Seitenwänden und sich zwischen den Seitenwänden erstreckenden Querwänden umgrenzt werden. Die Anlage bzw. der Tunnel ist in Modulbauweise ausgeführt. Die zu behandelnden Werkstücke werden auf Hängevorrichtungen durch den Tunnel befördert und jeweils in entsprechende Bäder abgesenkt. Für komplette Rohkarosserien ist eine solche Anlage nur bedingt geeignet.

Weiter ist ein Arbeitskabinensystem zur Reinigung und Oberflächenbehandlung von Gegenständen bekannt (DE 295 15 615 U1), bei dem mehrere Basiseinheiten zu einem Kabinensystem unterschiedlicher Zweckbestimmung kombinierbar sind. Jede Basiseinheit besteht aus Wandmodulen, die über einen Hohlraum zur Aufnahme von Funktionsbaugruppen verfügen. Solche Arbeitskabinensysteme sind insbesondere zur Durchführung von Sandstrahlarbeiten verwendbar, jedoch für die Serienproduktion von Fahrzeugkarosserien nicht geeignet.

Aus der DE 30 46 849 A1 ist ferner lediglich ein Verfahren zur Lackierung von Gegenständen aller Art, unter anderem von PKW's, bekannt, wobei der jeweils zu lackierende Gegenstand zunächst in einer Reinigungskammer gereinigt, danach in einer Lackierkammer spritzlackiert und anschließend in einer Trockenkammer getrocknet wird. Die dazu angegebene Vorrichtung ist nur schematisch aufgezeigt, ohne dass ein Hinweis auf die Art der Reinigung in der Reinigungskammer gegeben ist. Eine solche einfache Lackieranlage in Verbindung mit einem so einfachen Verfahren wird zwar im handwerklichen Bereich eingesetzt, hat jedoch mit den komplexen Verfahren und Anlagen einer Großlackiereinrichtung eines Fahrzeugherstellers zur Beschichtung von Rohkarossen und den dabei auftretenden Problemen keine Gemeinsamkeiten.

Aus der DE 40 14 493 A1 ist ein gattungsgemäßes Verfahren bekannt, wobei in einem Verfahrensschritt in einer Rohbauanlage eine Rohkarosserie hergestellt wird und in einem weiteren Verfahrensschritt die Rohkarosserie in einer Lackieranlage, die Reinigungssysteme enthält, zugeführt und lackiert wird. Konkret ist hier ein Reinigungssystem zwischen zwei Beschichtungsstationen nach dem Aufbringen eines Unterbodenschutzes vorgesehen.

Aus der US-A-5 524 329 ist eine Vorrichtung für eine Reinigung der Außenflächen einer Rohkarosserie vor einer Lackierung bekannt.

Aufgabe der Erfindung ist es, ein gattungsgemäßes Verfahren zur Herstellung einer Fahrzeugkarosserie so weiterzubilden, dass der Eintrag von Verschmutzungen in die Lackieranlage verringert wird und zudem die Erkennung von Oberflächenfehlern einer Rohkarosserie verbessert wird. Weiter besteht die Aufgabe der Erfindung darin, eine geeignete Vorrichtung zur Durchführung dieses Verfahrens zur Verfügung zu stellen.

Diese Aufgabe wird hinsichtlich des Verfahrens mit den Merkmalen des Anspruchs 1 gelöst.

Gemäß Anspruch 1 wird in einem weiteren, dazwischenliegenden Verfahrensschritt die Rohkarosserie zwischen der Rohbauanlage und der Reinigungssysteme, insbesondere eingangsseitige Entfettungssysteme enthaltenden Lackieranlage in einer Reinigungsanlage gründlich gereinigt und werden damit Verunreinigungen der Rohkarosserie vor deren Eintritt in die Lackieranlage beseitigt. Der Verfahrensschritt der Reinigung ist aufgeteilt in eine Außenreinigung und eine Innenreinigung mit entsprechenden Anlagenteilen.

Ausgehend von einem gattungsgemäßen Verfahren in Verbindung mit einer Serienlackieranlage für Rohkarossen nach einem Rohanlagenbau wird hier somit ein weiterer Verfahrensschritt für eine Außenreinigung und eine Innenreinigung mit jeweils einer zusätzlichen Vorrichtung zwischen dem Rohbau und dem Eintritt in die Lackieranlage eingeschoben. Die bisherigen Reinigungssysteme der Lackieranlage, insbesondere Entfettungssysteme, bleiben weiter erforderlich und sollen dadurch nicht ersetzt werden. Vorteilhaft wird dadurch erreicht, dass insbesondere eine Verunreinigung der speziellen und hochwertigen ersten Tauchbäder der Lackieranlage durch die Rohkarosserien weitestgehend vermieden wird. Dadurch sind vorteilhaft höhere Badstandzeiten mit geringeren Kosten möglich. Zudem können Außenhautfehler nach der Reinigung vor der Lackierung erkannt werden, wodurch die Anzahl von Rohkarossen, die mit Oberflächenfehlern die Lackierung durchlaufen, stark reduziert wird, so dass Kosten für aufwendige Nacharbeiten ebenfalls reduziert werden.

Entsprechend erfolgt in einem Verfahrensschritt nach Anspruch 2 die Inspektion und Erkennung von Oberflächenfehlern der Karosserieaußenhaut durch eine Prüfperson oder automatisiert, sowie ggf. eine Markierung und Nacharbeitung vorteilhaft nach der Reinigung in der Reinigungsanlage.

Besonders vorteilhaft ist nach Anspruch 3 der Außenreinigung die Erkennung und ggf. Nacharbeitung von Außenhautfehlern nachgeordnet, woran sich dann die Innenreinigung anschließt. Im Zusammenhang mit der Innenreinigung können dann noch Reinigungsvorgänge zur Beseitigung von durch die Nacharbeitung von Oberflächenfehlern entstandenen Verunreinigungen durchgeführt werden.

Um eine gründliche Reinigung zu erhalten, wird mit Anspruch 5 die aufeinanderfolgende Aufbringung von Reinigungsflüssigkeiten vorgeschlagen, nämlich eines flüssigen Reinigers, Betriebswassers und VE-Wassers (vollentkalktes Wasser).

Diese Reinigungsflüssigkeiten sollen aus Kostengründen und aus Gründen des Umweltschutzes möglichst lange in einem Umlaufverfahren verwendet werden. Für lange Standzeiten muss daher eine Vermischung der unterschiedlichen Reinigungsflüssigkeiten möglichst vermieden werden. Um dies zu erreichen, werden gemäß Anspruch 5 die unterschiedlichen Reinigungsflüssigkeiten jeweils getrennt aufgefangen und für eine Mehrfachverwendung gesammelt. Um eine solche Trennung weiter zu verbessern, werden zudem Abtropfzeiten zwischen den unterschiedlichen Aufbringungen eingeschaltet.

Hinsichtlich der Vorrichtung wird die Aufgabe mit den Merkmalen des Anspruchs 6 gelöst.

Gemäß Anspruch 6 ist eine Reinigungsanlage vorgesehen, die eine Außenreinigungsanlage und eine Innenreinigungsanlage umfasst. Sowohl die Außenreinigungsanlage wie auch die Innenreinigungsanlage besteht aus wenigstens einer Förderbahn zum Transport der Rohkarosserien durch die Reinigungsanlagen, aus im Verlauf der Förderbahn aufeinanderfolgende Sprühund Wascheinrichtungen zur Aufbringung der Reinigungsflüssigkeiten und aus zugeordneten Auffangwannen sowie nachgeordneten Behältern, Pumpen und Ventilen für die unterschiedlichen Reinigungsflüssigkeiten. Zweckmäßig sind auch Trocknereinrichtungen vorgesehen.

Beim Einsatz einer solchen Vorrichtung zwischen dem Karosserierohbau und der Lackieranlage werden die eingangs im Zusammenhang mit dem Verfahren angegebenen Vorteile erreicht.

Die Sprüh- und Wascheinrichtungen können nach Anspruch 7 je nach den Gegebenheiten als die Rohkarosserie zumindest weitgehend in einer Querebene umgebende Düsenringe ausgeführt sein. Je nach Bedarf können dabei nacheinander mehrere Düsenringe für die gleiche Reinigungsflüssigkeit eingesetzt werden. Die Düsenringe können insbesondere als Portale mit daran verstellbar angebrachten Spritzdüsen ausgeführt sein. Insbesondere bei geringen Karosseriestückzahlen kann die Aufbringung der Reinigungsflüssigkeiten auch über programmgesteuerte Roboter erfolgen.

Gemäß Anspruch 8 werden dabei die unterschiedlichen Reinigungsflüssigkeiten jeweils nacheinander durch wenigstens einen Roboter gesteuert aufgebracht. Entsprechend werden nacheinander die jeweiligen Reinigungsflüssigkeiten im Bereich des Roboters aufgefangen und gesammelt, wobei eine Trennung der unterschiedlichen Reinigungsflüssigkeiten durch eine umschaltbare Ablaufverteilung erfolgt.

Um alle Orte an der Karosserie möglichst schnell und einfach erreichen zu können, ist ein solcher Roboter nach Anspruch 9 seitlich entlang einer zu reinigenden Rohkarosserie gesteuert verfahrbar und weist einen gesteuert verfahrbaren Arm mit endseitigen Düsen zur Aufbringung der Reinigungsflüssigkeiten auf. Solche Roboter sind sowohl für die Außenreinigung als auch Innenreinigung geeignet. Insbesondere kann ein Roboterarm für eine gründliche Innenreinigung auch durch die Karosserieöffnungen in den Karosserieinnenbereich eingeführt werden.

Die erforderliche Steuerung der Reinigungsanlage, insbesondere der Düsenringe und/oder der Roboter ist relativ komplex. Es wird daher mit Anspruch 10 eine Steuerung durch eine Rechneranlage nach einem jeweils abgelegten, karosseriespezifischen Programm vorgeschlagen. Zum zeitrichtigen Start des jeweiligen, karosseriespezifischen Reinigungsprogramms wird vorgeschlagen, über Sensoren den jeweiligen Karosserietyp und den Anfang einer Karosserie zu detektieren.

In einer bevorzugten Ausführungsform nach Anspruch 11 wird zumindest ein Rollenbahnteil, auf dem eine Rohkarosserie steht, kippbar ausgeführt, so dass die Reinigungsflüssigkeit aus dem Innenbereich herausläuft. Dies ist insbesondere in Verbindung mit und am Ende der Innenreinigung vorteilhaft.

Die Kippbewegung lässt sich einfach nach Anspruch 12 durch eine Schwenkung des Rollenbahnteils auf einer mittleren Querachse mit Hilfe eines Arbeitszylinders durchführen.

Die erfindungsgemäße Reinigung erfolgt zweckmäßig im Rahmen des Transports der Rohkarosserie zur Lackieranlage, wobei nach Anspruch 13 als Förderbahn eine kontinuierlich angetriebene, üblich verwendete Rollenbahn beansprucht wird.

Diese Segmente enthalten die Förderbahn und/oder Sprüh- und Wascheinrichtungen und/oder Auffangwannen und/oder Abtropfstrecken und/oder Trockeneinrichtungen. Weiter können Absaugungen und Wärmerückgewinnungsvorrichtungen enthalten sein.

Durch einen Aufbau in Modulbauweise sind eine einfache Herstellung sowie kostengünstige Montage und bei einem Produktionsstandortwechsel ggf. eine einfache Demontage möglich.

Nach Anspruch 15 werden Segmentinnenbereiche voneinander zumindest teilweise durch Abschottungen, die eine Rohkarosserie möglichst eng umgeben, getrennt. Dadurch können Bereiche mit unterschiedlichen zugeordneten Reinigungsflüssigkeiten gegen Flüssigkeitsspritzer und Dämpfe anderer Reinigungsflüssigkeiten sowie ggf. gegen unterschiedliche Temperaturen weitgehend abgeschottet werden, so dass unerwünschte Vermischungen reduziert werden. Die Einzelsegmente sind nach Anspruch 16 in Längsrichtung aneinandergereiht und über Anlageflansche miteinander verschraubt.

Gemäß Anspruch 17 kann es je nach den Gegebenheiten vorteilhaft sein, weitere Segmentaufteilungen vorzunehmen und insbesondere in Obersegmenten die Förderbahn und die Sprüh- und Wascheinrichtungen anzubringen, wobei dann zugeordnete Untersegmente Auffangwannen und zugehörige Ablaufsteuerelemente enthalten. Eine solche zusätzliche, horizontale Unterteilung kann die Flexibilität und Einsatzmöglichkeit weiter erhöhen.

Für die eingesetzten Bauteile sind korrosionsfeste bzw. korrosionsgeschützte Materialien zu verwenden, zumindest soweit diese mit den Reinigungsflüssigkeiten in Verbindung kommen.

Die Reinigungsanlage wird bevorzugt voll automatisch betrieben. Bei geringen Karosseriestückzahlen und/oder einem Einsatzort mit kostengünstigen Arbeitskräften können auch einzelne Maßnahmen, wie beispielsweise der Transport der Rohkarosserien durch die Reinigungsanlage von Hand durchgeführt werden.

Anhand einer Zeichnung werden Ausführungsformen der Erfindung näher erläutert.

Es zeigen:
- Fig. 1: eine schematische Darstellung einer Außenreinigungsanlage einer in Modulbauweise aufgebauten Reinigungsanlage,
- Fig. 2: einen Querschnitt durch ein Segment einer Außenreinigungsanlage mit einer Segmentabschottung,
- Fig. 3: einen Querschnitt durch ein Segment einer Außenreinigungsanlage mit einem Düsenring,
- Fig. 4: eine detaillierte Darstellung einer Segmentverbindung,
- Fig. 5: eine alternative Ausführungsform einer Außenreinigungsanlage mit Robotern als Sprüh- und Wascheinrichtungen,
- Fig. 6: eine Draufsicht auf die in der Fig. 5 dargestellte Außenreinigungsanlage,
- Fig. 7: einen Querschnitt entlang der Linie A-A der Fig. 5,
- Fig. 8: eine Draufsicht auf eine Innenreinigungsanlage einer Reinigungsanlage,
- Fig. 9: eine vergrößerte Darstellung eines Reinigungssegments der in Fig. 8 dargestellten Innenreinigungsanlage,
- Fig. 10: einen Querschnitt entlang der Linie B-B der Fig. 8,
- Fig. 11: einen Querschnitt entlang der Linie C-C der Fig. 8,
- Fig. 12: eine Seitenansicht eines abkippbaren Rollenbahnteils einer Innenreinigungsanlage in einer Nicht-Kippstellung, und
- Fig. 13: eine Seitenansicht eines abkippbaren Rollenbahnteils einer Innenreinigungsanlage in einer Kippstellung.

Bei einem Verfahren zur Herstellung einer Fahrzeugkarosserie wird zuerst in einer Rohbauanlage eine Rohkarosserie 2 hergestellt. Die aus der Rohbauanlage kommenden Rohkarosserien 2 sind in der Regel durch Ölfilme oder Staub verunreinigt. Um eine Verschmutzung der hochwertigen ersten Tauchbäder einer Lackieranlage zu vermeiden sowie Oberfächenfehler rechtzeitig vor dem Aufbringen der Lackierung zu erkennen, werden in einem der Rohbauanlage nachgeschalteten Verfahrensschritt die Verunreinigungen von der Rohkarosserien 2 vor deren Eintritt in die Lackieranlage in einer Reinigungsanlage 1 abgewaschen.

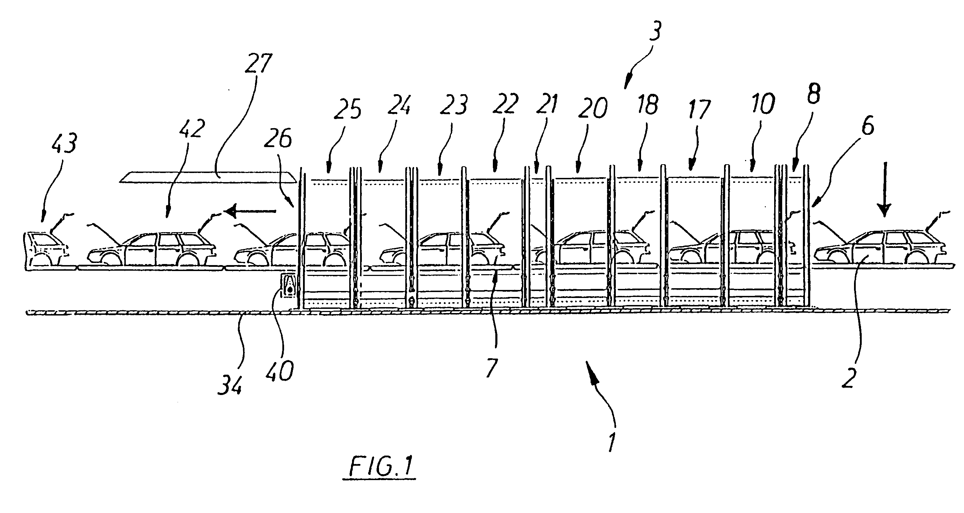

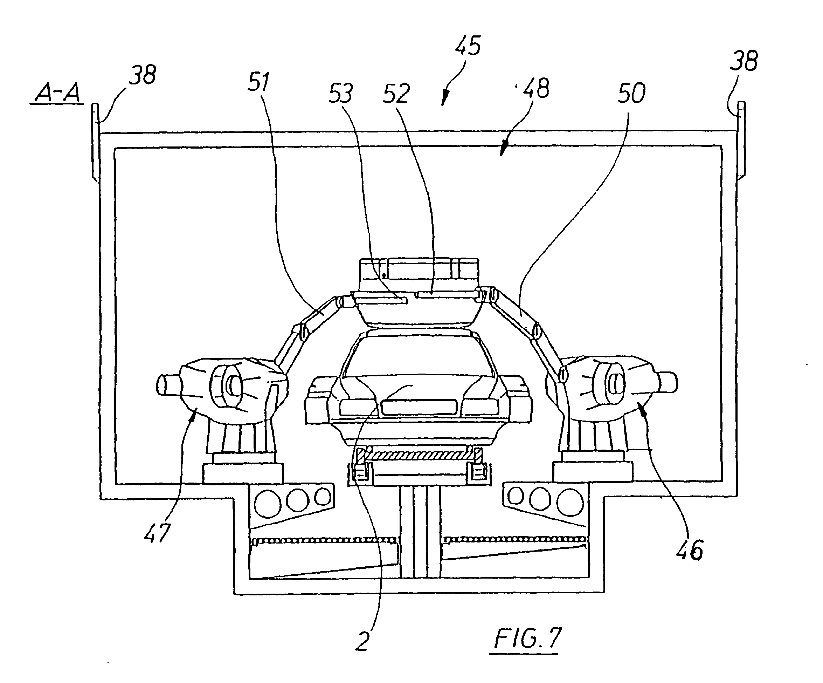

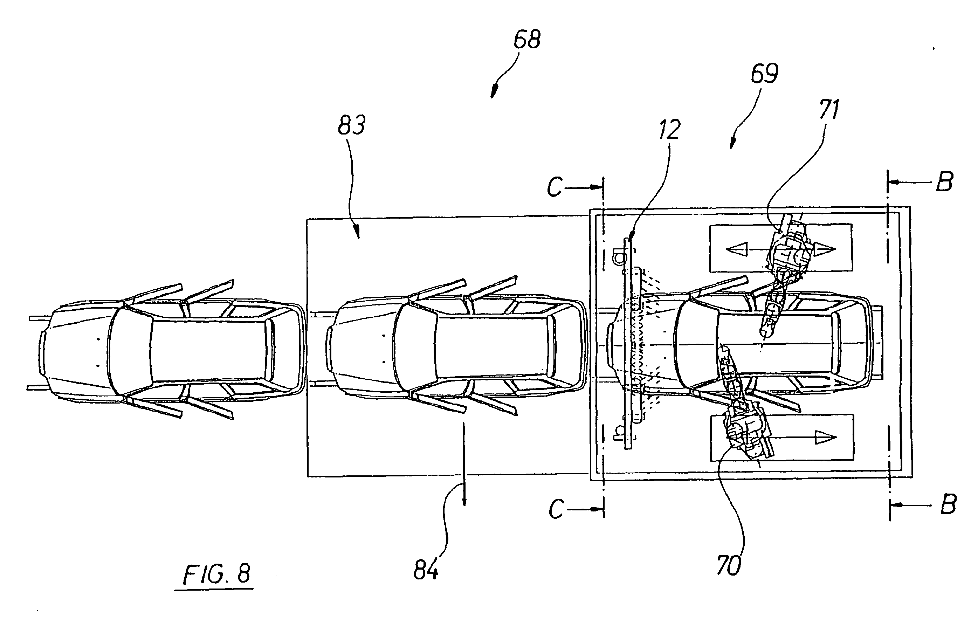

In einem ersten Reinigungsschritt erfolgt hierbei eine Außenreinigung der Rohkarosserie 2 in einer Außenreinigungsanlage 3 bzw. 45 (Fig. 1 bis 7). Daran anschließend werden in einer Erkennungsstation 42 Außenhautfehler der Rohkarosserie 2 entweder durch eine Prüfperson oder automatisiert ermittelt und ggf. in einer Nacharbeitstation 43 beseitigt. In einem zweiten Reinigungsschritt wird schließlich eine Innenreinigung der Rohkarosserie 2 in einer Innenreinigungsanlage 68 (Fig. 8 bis 13) vorgenommen, wobei in der Innenreinigungsanlage 68 gleichzeitig auch die durch eine evt. Nacharbeit entstandenen Verunreinigungen auf der Karosserieaußenhaut beseitigt werden.

Die Rohkarosserien 2 werden in der Reinigungsanlage 1 somit einer gründlichen Reinigung unterzogen, so daß sich in der Lackieranlage insbesondere bei den ersten Tauchbädern längere Badstandzeiten ergeben. Durch diese der Lackieranlage vorgeschaltete Reinigung der Rohkarosserien 2 können Außenhautfehler bereits im Vorfeld der Lackieranlage besser erkannt und beseitigt werden. Dadurch wird die Anzahl von Rohkarosserien 2, die mit Oberflächenfehlern die Lackieranlage durchlaufen, stark reduziert.

In der Fig. 1 ist eine ersten Ausführungsform einer Außenreinigungsanlage 3 einer in Modulbauweise aus Segmenten aufgebauten Reinigungsanlage 1 dargestellt. Unmittelbar vor einem Eingang 6 zur Außenreinigungsanlage 3 wird eine Rohkarosserie 2 auf eine als kontinuierlich angetriebene Rollenbahn ausgebildete Förderbahn 7 aufgesetzt. Mittels dieser Förderbahn 7 werden die Rohkarosserien 2 durch die Reinigungsanlage 1 transportiert.

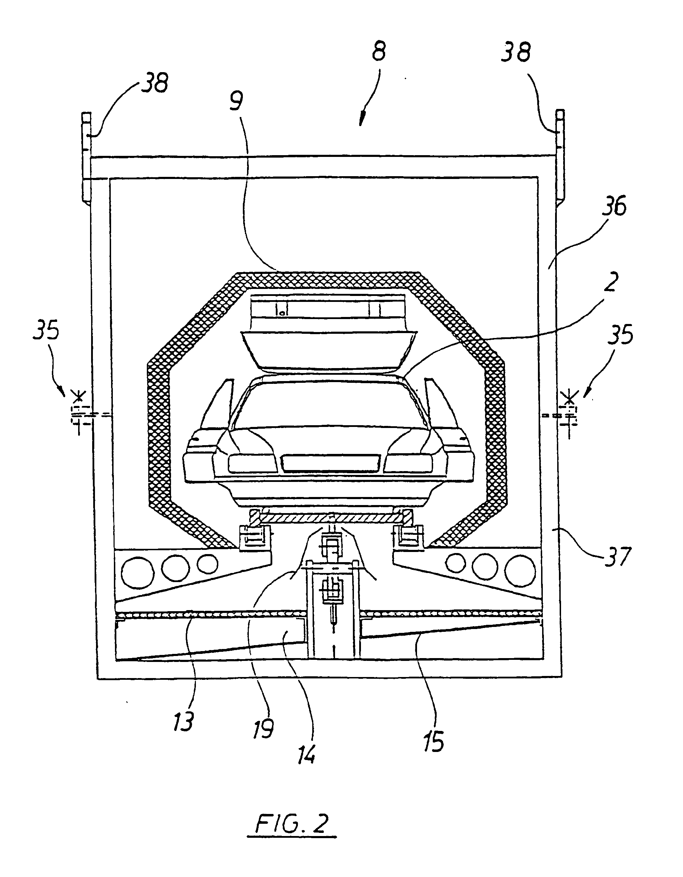

Die Außenreinigungsanlage 3 umfaßt als erstes Segment eine Einlaufabschottung 8, die eine Luftsperre gegen Dampf ausbildet. Wie dies insbesondere aus der Fig. 2 ersichtlich ist, ist die Rohkarosserie 2 hier von einer Segmentabschottung 9 eng umgeben. Eine derartige Segmentabschottung 9 ist bevorzugt teilbar ausgebildet und damit leicht demontierbar.

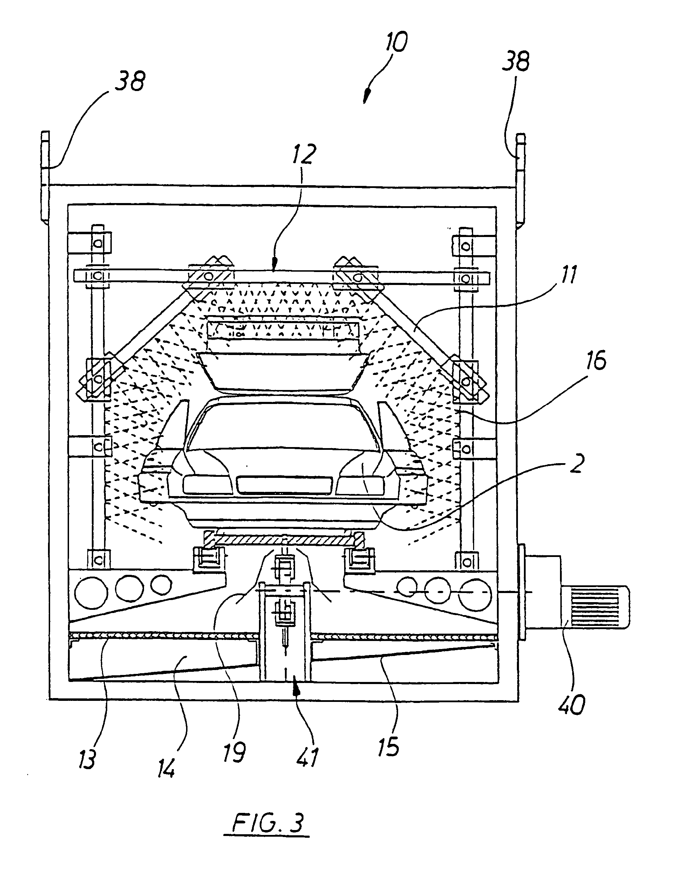

Im auf die Einlaufabschottung 8 folgenden Reinigersegment 10 erfolgt eine Reinigung der Rohkarosserie 2 von Verunreinigungen mittels eines flüssigen Reinigers. Dieser Reiniger wird über portalförmige Düsenringe 12 aufgebracht, die als Sprüh- und Wascheinrichtungen die Rohkarosserie 2 in einer Querebene umgeben, wie dies insbesondere aus der Fig. 3 ersichtlich ist. Die Düsenringe 12 sind aus einzelnen Rohrklemmelementen 11 aufgebaut und umfassen zur Düsenringmitte hin ausgerichtete, verstellbare Düsen 16. In einer alternativen Verwendungsform können diese Düsenringe 12 auch mit Trocknungsdüsen bestückt sein und auch zum Trocknen verwendet werden.

Da in den Reinigungsstrecken eine möglichst hohe Wassermenge umzuwälzen ist, sind in dem Reinigersegment 10 bevorzugt mindestens sechs Düsenringe 12 aus nicht rostendem Edelstahl, z.B. V2A, hintereinander in Durchlaufrichtung der Rohkarosserien 2 versetzt angeordnet. Die Behandlungszeit der Rohkarosserie 2 in dem Reinigersegment 10 beträgt ca. 30 Sekunden, wobei der flüssige Reiniger mit einem Druck von bis zu 3 bar auf die Rohkarosserie 2 aufgesprüht wird. Der Solldruckbereich in einem solchen Reinigersegment 10 beträgt regelmäßig zwischen 1,5 bis 2 bar.

Der von der Rohkarosserie 2 abfließende flüssige Reiniger, der mit den von der Rohkarosserie 2 abgewaschenen, hauptsächlich öligen Verunreinigungen angereichert ist, gelangt, wie dies aus der Fig. 3 ersichtlich ist, über einen Gitterrost 13 in eine Auffangwanne 14, dessen schräg angestellter Boden 15 durch Ablaufbleche gebildet ist. Bevor der aufgefangene flüssige Reiniger wieder dem Reinigerkreislauf zugeführt wird, durchläuft er zweckmäßigerweise einen Separator zur Ölabscheidung. Dadurch kann der flüssige Reiniger möglichst lange in einem Kreislauf verwendet werden. Wenn der flüssige Reiniger nach einer bestimmten Gebrauchszeit einen bestimmten Verunreinigungsgrad aufweist, wird über eine Wechselanzeige ein vorzunehmender Austausch des flüssigen Reinigers angezeigt. Eine derartige Wechselanzeige kann z. B. mittels einer Steuerung über einen elektrischen Leitwert realisiert werden.

An das Reinigersegment 10 schließt sich ein erstes Abtropfsegment 17 an, das im unteren Segmentbereich entsprechend dem Reinigersegment 10 eine Auffangwanne 14 zur Aufnahme des von der Rohkarosserie 2 abtropfenden Reinigers aufweist. Die Abtropfung kann hier ggf. durch Luftdüsen zusätzlich unterstützt werden.

An das erste Abtropfsegment 17 schließt sich ein Betriebswassersegment 18 an, das ähnlich dem Reinigersegment 10 aufgebaut ist. Durch das vorgeschaltete Abtropfsegment 17 wird dabei sichergestellt, daß die Rohkarosserie 2 mit möglichst wenig flüssigem Reiniger in das Betriebswassersegment 18 gelangt. Dadurch wird eine Vermischung des flüssigen Reinigers mit dem Betriebswasser weitestgehend vermieden, was lange Standzeiten für das ebenfalls im Umlaufverfahren verwendete Betriebswasser gewährleistet. Um auch hier eine möglichst hohe Wassermenge umzuwälzen, sind mindestens drei z.B. aus nichtrostendem V2A bestehende Düsenringe 12 hintereinander in Durchlaufrichtung der Rohkarosserie 2 versetzt in dem Betriebswassersegment 18 angeordnet.

Die Behandlungszeit, während der das Betriebswasser über die Düsenringe 12 mit einem Druck von bis zu 3 bar auf die Rohkarosserie 2 aufgebracht wird, beträgt ca. 20 Sekunden. Der Solldruckbereich in einem solchen Betriebswassersegment 10 beträgt regelmäßig zwischen 1,5 bis 2 bar. Das von der Rohkarosserie 2 ablaufende Betriebswasser gelangt analog zu dem Reinigersegment 10 über einen Gitterrost 13 in eine Auffangwanne 14 mit schräg angestelltem Boden 15. Bevor das aufgefangene und mit Verunreinigungen angereicherte Betriebswasser wieder in den Betriebswasserkreislauf eingespeist wird, werden die Verunreinigungen über einen Beutelfilter aus dem aufgefangenen Betriebswasser herausgefiltert. Bei einer zunehmenden Anreicherung des Betriebswassers mit Fremdstoffen und Fremdflüssigkeiten wird ebenfalls analog zum Reinigersegment 10 ein Wasserwechsel über eine Wasserwechselanzeige angezeigt.

An das Betriebswassersegment 18 schließt sich ein zweites Abtropfsegment 20 an, das im unteren Segmentbereich entsprechend dem Betriebswassersegment 18 eine Auffangwanne 14 zur Aufnahme des von der Rohkarosserie 2 abtropfenden Betriebswassers aufweist. Dadurch wird eine Vermischung des im nachfolgenden VE-Wassersegments 21 auf die Rohkarosserie 2 aufgebrachten VE-Wassers mit Betriebswasser weitgehend vermieden, was lange Standzeiten für das ebenfalls im Umlaufverfahren verwendete VE-Wasser (vollentkalktes Wasser) gewährleistet.

Im VE-Wassersegment 21 sind wenigstens zwei aus nichtrostendem V2A-Stahl hergestellte Düsenringe 12 hintereinander in Durchlaufrichtung der Rohkarosserie 2 versetzt angeordnet. Mittels dieser Düsenringe 12 wird während einer ca. 10 Sekunden dauernden Behandlungszeit VE-Wasser unter einem Druck von bis zu 3 bar auf die Rohkarosserie 2 aufgesprüht. Analog den vorhergehenden Reinigungsstufen beträgt der regelmäßige Solldruckbereich hier zwischen 1,5 bis 2 bar. Das von der Rohkarosserie 2 ablaufende VE-Wasser wird hier ebenfalls wieder in einer analog den vorhergehenden Segmenten aufgebauten Auffangwanne 14 gesammelt. Bevor das VE-Wasser wieder in den Kreislauf eingespeist wird, werden die im aufgefangenen VE-Wasser enthaltenen Verunreinigungen mittels eines Beutelfilters herausgefiltert. Auch hier ist wieder eine Wasserwechselanzeige vorgesehen.

An das VE-Wassersegment 21 schließt sich ein drittes Abtropfsegment 22 an, das im unteren Segmentbereich entsprechend dem VE-Wassersegment 21 eine Auffangwanne 14 zur Aufnahme des von der Rohkarosserie 2 abtropfenden VE-Wassers aufweist. Unmittelbar an das dritte Abtropfsegment 22 schließen sich zwei Trockensegmente 23, 24 an. In diesen Trockensegmenten 23, 24 erfolgt eine Trocknung der Rohkarosserie über z. B. Warmluftdüsen.

An diese Trocknungssegmente 23, 24 schließt sich ein Abschottungssegment 25 an, das im Aufbau der insbesondere in der Fig. 2 dargestellten Einlaufabschottung 8 entspricht. Dieses Abschottungssegment 25 am Ausgang 26 der Außenreinigungsanlage 3 dient insbesondere auch der Dämpfung der Zu- und Abluftgeräusche sowie einer Abkühlung ggf. mit Wärmerückgewinnung der Rohkarosserien 2.

Im Bereich unmittelbar nach dem Austritt einer Rohkarosserie 2 aus der Außenreinigungsanlage 3 ist eine Absaugung 27 zur Wärmerückgewinnung vorgesehen. Eine derartige Absaugung ist auch im Bereich des Abschottungssegments 25 und der Trocknungssegmente 23, 24 vorgesehen, die in der Fig. 1 jedoch nicht dargestellt ist. Im Bereich der Trocknungssegmente 23, 24 ist zusätzlich ein Wasserabscheider zur Absonderung des verdampfenden Wassers angeordnet.

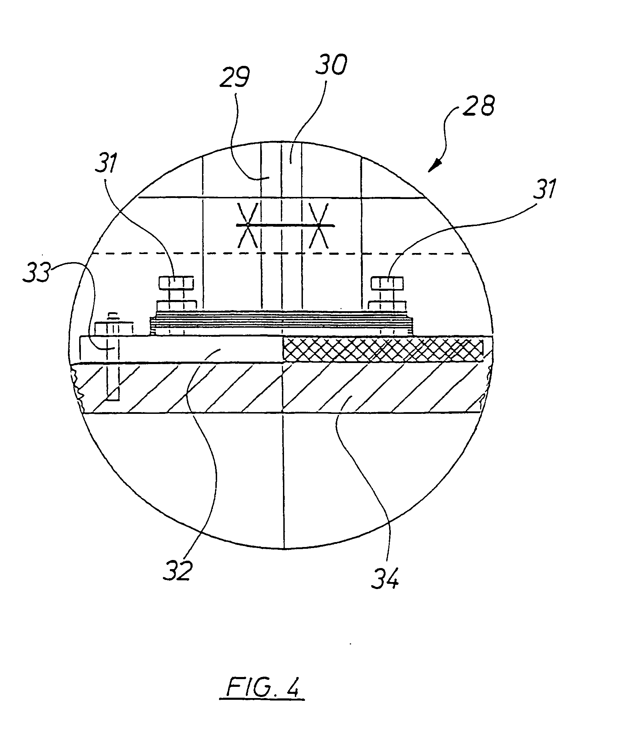

Die einzelnen Segmente 8, 10, 17, 18, 20, 21, 22, 23, 24 und 25 stellen separat transportierbare Containermodule dar und sind unterschiedlich lang, wobei die Länge insgesamt so zu wählen ist, daß eine Anpassung an die jeweilige Taktzeit und Fördergeschwindigkeit einer Serienproduktion stattfindet. Untereinander sind die Segmente 8, 10, 17, 18, 20, 21, 22, 23, 24 und 25 durch in der Fig. 4 dargestellte Segmentverbindungen 28 verbunden. Eine Segmentverbindung 28 ist hier durch zwei in einer Vertikalebene liegende Anlageflansche 29, 30 gebildet, die miteinander verschraubt sind. Zusätzlich umfaßt die Segmentverbindung 28 Schrauben 31 für einen Niveauausgleich. Eine Fundamentplatte 32 ist im linken Teil der Fig. 4 mit dem Boden 34 durch eine Schraubverbindung 33 verbunden und im rechten Teil der Fig. 4 in den Boden 34 einbetoniert.

Wie dies in der Fig. 2 lediglich strichliert eingezeichnet ist, kann wenigstens ein Teil der Segmente aus einem Untersegment 37 und einem Obersegment 36 an horizontalen Anlageflanschen 35 zusammengesetzt sein.

Dadurch wird die Flexibilität und Einsatzmöglichkeit weiter erhöht. Für den Transport der einzelnen Segmente 8, 10, 17, 18, 20, 21, 22, 23, 24 und 25 sind am Obersegment 36 zusätzlich Ösen 38 für ein Krangeschirr angebracht.

Im Bereich des Abschottungssegments 25 ist ein Förderantrieb 40 als Antrieb für die Rollenbahn durch alle Segmente 8, 10, 17, 18, 20, 21, 22, 23, 24 und 25 angeordnet. In einer alternativen Ausführungsform ist der Förderantrieb 40 in der Fig. 2 im Außenbereich des Reinigersegments 10 angebracht. Dieser Förderantrieb 40 treibt eine hier nicht näher dargestellte Mitnehmerkette einer Antriebsmechanik 41, die mit der Rollenbahn 7 verbunden ist, kontinuierlich an. Um zu verhindern, daß die im mittleren Segmentbereich unter der Rollenbahn 7 angeordnete Antriebsmechanik 41 dem ablaufenden Reinigungswasser ausgesetzt ist, sind Abdeckbleche 19 vorgesehen. Altemativ sind auch Segmenteinzelantriebe möglich.

Im Anschluß an die Außenreinigung der Rohkarosserie 2 in der Außenreinigungsanlage findet in einer Erkennungsstation 42 eine Erkennung von Oberflächenfehlern auf der Karosserieaußenhaut statt. Die Inspektion und Erkennung von Oberflächenfehlern erfolgt entweder durch eine Prüfperson oder automatisiert. Falls Oberflächenfehler an der Karosserieaußenhaut entdeckt werden, erfolgt in einer der Erkennungsstation 42 nachgeordneten Nacharbeitstation 43 eine Nacharbeit dieser Außenhautfehler, z. B. durch Schleifen.

Dieser Aufbau der Außenreinigungsanlage 3 gewährleistet eine leichte Demontage und Montage, z. B. bei einem Produktionsstandortwechsel, und ist für Produktionslinien mit großen Karosseriestückzahlen geeignet.

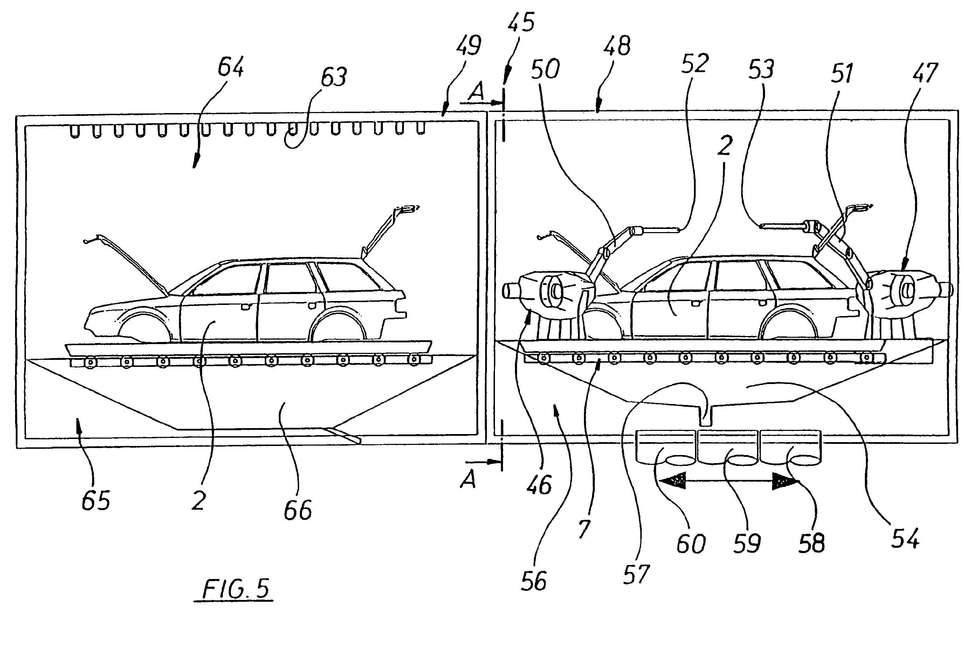

In den Fig. 5 bis 7 ist eine alternativen Ausführungsform einer Reinigungsanlage 45 für Produktionslinien mit geringen Karosseriestückzahlen dargestellt. Die Aufbringung der Reinigungsflüssigkeiten erfolgt hier durch ein dreigeteiltes, umschaltbares System mit Robotern 46 und 47.

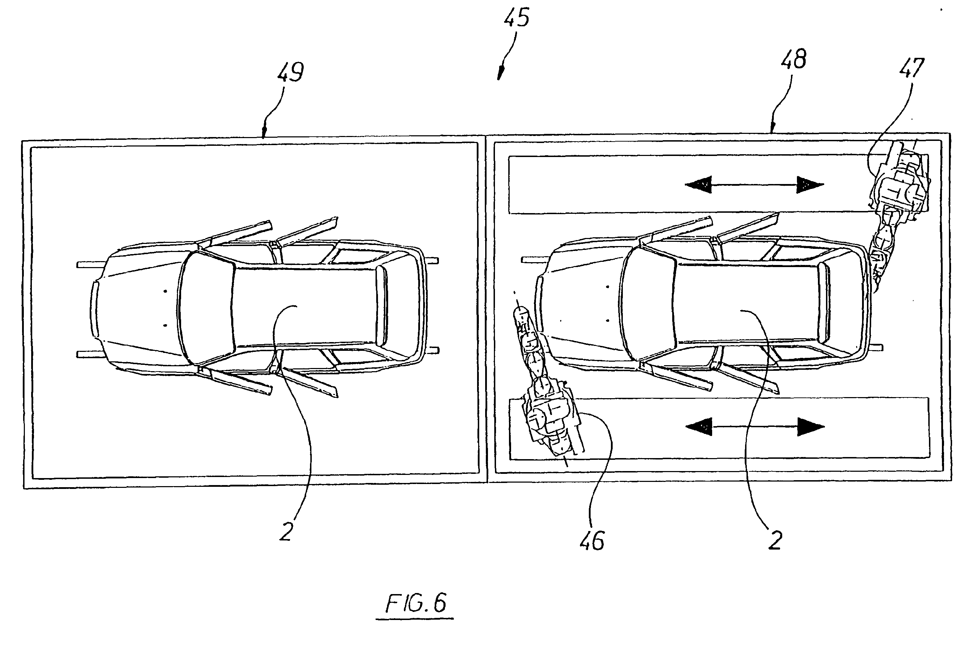

Eine derartige Außenreinigungsanlage 45 ist aus lediglich einem Reinigungssegment 48 und einem darauffolgenden Trocknungssegment 49 aufgebaut. Im Reinigungssegment 48 sind die Roboter 46, 47 jeweils seitlich entlang einer zu reinigenden Rohkarosserie 2 auf Führungsschienen gesteuert verfahrbar, wie dies in der Fig. 6 dargestellt ist. Die Roboter 46, 47 selbst sind spritzwassergeschützt und umfassen jeweils einen gesteuert verfahrbaren Arm 50, 51 mit endseitigen Düsen 52 bzw. 53 zur Aufbringung der unterschiedlichen Reinigungsflüssigkeiten.

In einer ersten Reinigungsstufe wird über die Roboter 46, 47 flüssiger Reiniger mit bis zu 3 bar Druck auf die Karosserie aufgesprüht, wobei die Roboter 46, 47 entsprechend programmgesteuert zu beiden Seiten entlang der Rohkarosserie 2 verfahren werden. Der Solldruckbereich beträgt auch hier regelmäßig zwischen 1,5 und 2 bar. Dadurch wird ein sich nach dem Rohbau auf der Rohkarosserie 2 befindlicher Ölfilm, der mit Staub und sonstigen Verunreinigungen angereichert ist, von der Rohkarosserie 2 abgewaschen. Diese von der Rohkarosserie 2 ablaufende Reinigungsflüssigkeit gelangt anschließend in eine trichterförmige Auffangwanne 54 im unteren Reinigungssegmentbereich 56 und von dort über einen Wannenstutzen 57 in einen ersten Auffangbehälter 58 für flüssigen Reiniger, der in der ersten Reinigungsstufe programmgesteuert direkt unter den Wannenstutzen 57 verfahren ist. Zur Ölabscheidung ist ein hier nicht dargestellter Separator vorgesehen. Die Wasseraustauschsteuerung erfolgt auch hier über einen Leitwert.

In einer zweiten Reinigungsstufe wird über die Roboter 46, 47 Betriebswasser ebenfalls mit bis zu 3 bar Druck auf die Rohkarosserie 2 aufgesprüht. Das ablaufende Betriebswasser wird analog zur ersten Reinigungsstufe in der Auffangwanne 54 gesammelt und gelangt über den Wannenstutzen 57 in einen unter diesen programmgesteuert verfahrenen, zweiten Auffangbehälter 59 für Betriebswasser.

In der dritten Reinigungsstufe wird schließlich VE-Wasser über die Roboter 46, 47 auf die Rohkarosserie mit einem Druck von bis zu 3 bar aufgesprüht. Das von der Rohkarosserie 2 ablaufende VE-Wasser wird ebenfalls in der trichterförmigen Auffangwanne 54 aufgefangen und gelangt anschließend über den Wannenstutzen 57 in einen programmgesteuert unter den Wannenstutzen 57 verfahrenen Auffangbehälter 60 für VE-Wasser.

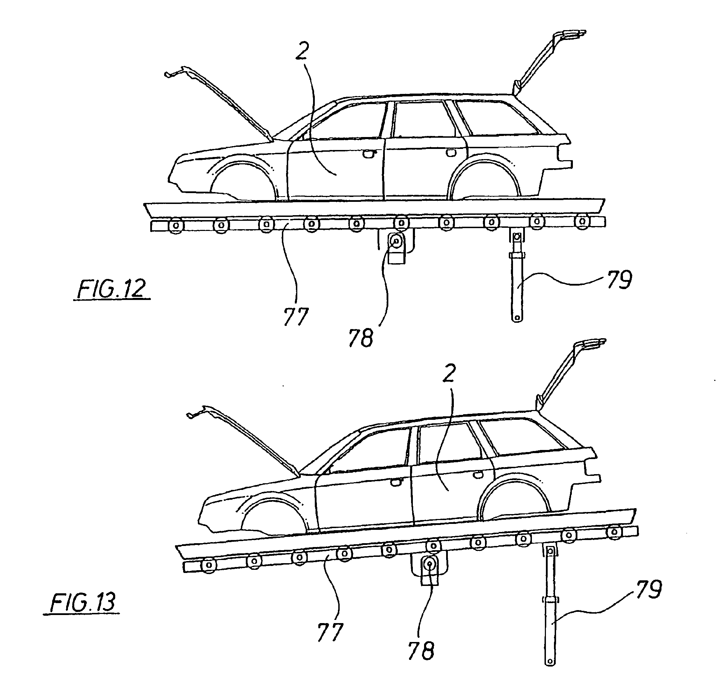

Um das Abtropfen der Rohkarosserie 2 nach den einzelnen Reinigungsstufen zu unterstützen, kann über die Roboter 46, 47 auch Luft auf die Rohkarosserie 2 geblasen werden. Dadurch kann eine zunehmende Vermischung der einzelnen Reinigungsmittel entsprechend einer Abtropfstrecke vermieden werden. Um ein vollständiges Ablaufen der Reinigungsmedien aus der Rohkarosserie 2 zu gewährleisten, kann die Rollenbahn 7 im Bereich der Roboter 46, 47 auch als Kippstation ausgebildet sein. Eine derartige Kippstation wird im Detail weiter unten im Zusammenhang mit der Innenreinigungsanlage 68 näher erläutert (Fig. 12 und 13).

In dem auf das Reinigungssegment 48 folgenden Trocknungssegment 49 wird die Rohkarosserie 2 getrocknet. Dazu sind in diesem Trocknungssegment 49 Warmluftdüsen 63 im oberen Trocknungssegmentbereich 64 angeordnet. Das mittels dieser Warmluftdüsen 63 von der Rohkarosserie 2 abgeblasene, restliche VE-Wasser wird in einer im unteren Trocknungssegmentbereich angeordneten Tropfwanne 66 aufgefangen. Von dort kann das VE-Wasser wieder in den VE-Wasserkreislauf eingespeist werden.

Nach dem Durchlaufen des Trocknungssegments 49 wird in analoger Weise zu der vorstehend beschriebenen Außenreinigungsanlage 3 eine Oberflächenfehlererkennung durchgeführt.

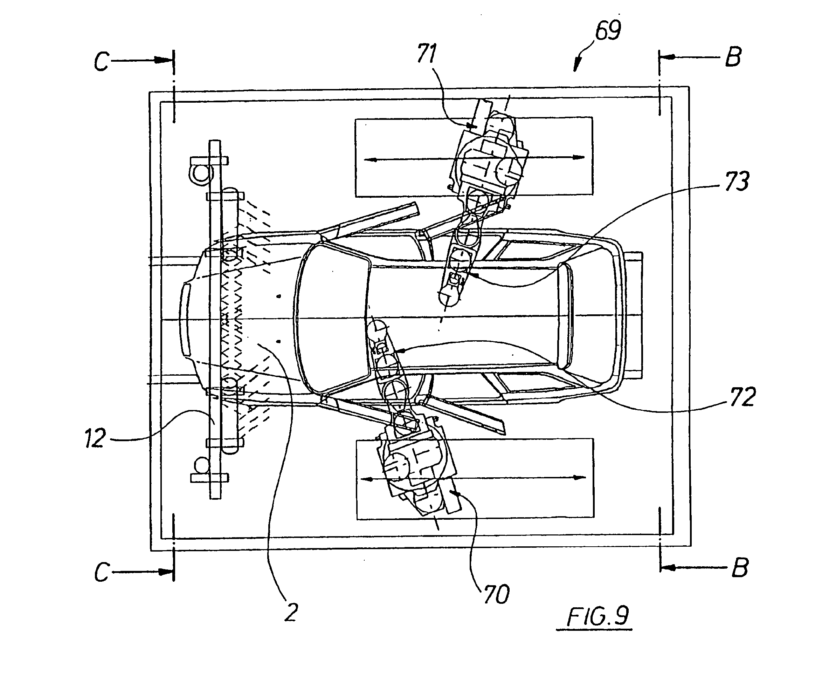

Im Anschluß an die Außenreinigung der Rohkarosseie 2 in einer der Außenreinigungsanlagen 3 bzw. 45 und eine ggf. erfolgte Nacharbeitung findet eine Innenreinigung der Rohkarosserie in einer Innenreinigungsanlage 68 statt. Diese Innenreinigungsanlage 68, die im Aufbau der Außenreinigungsanlage 45 ähnlich ist, umfaßt als erstes Segment ein Reinigungssegment 69, das in der Fig. 9 vergrößert dargestellt ist. Dort sind Roboter 70, 71, die in ihrem Aufbau den Robotern 46, 47 der Außenreinigungsanlage 45 entsprechen, jeweils an einer Seite der Rohkarosserie 2 programmgesteuert in Durchlaufrichtung der Rohkarosserien 2 auf Führungsschienen verfahrbar angeordnet.

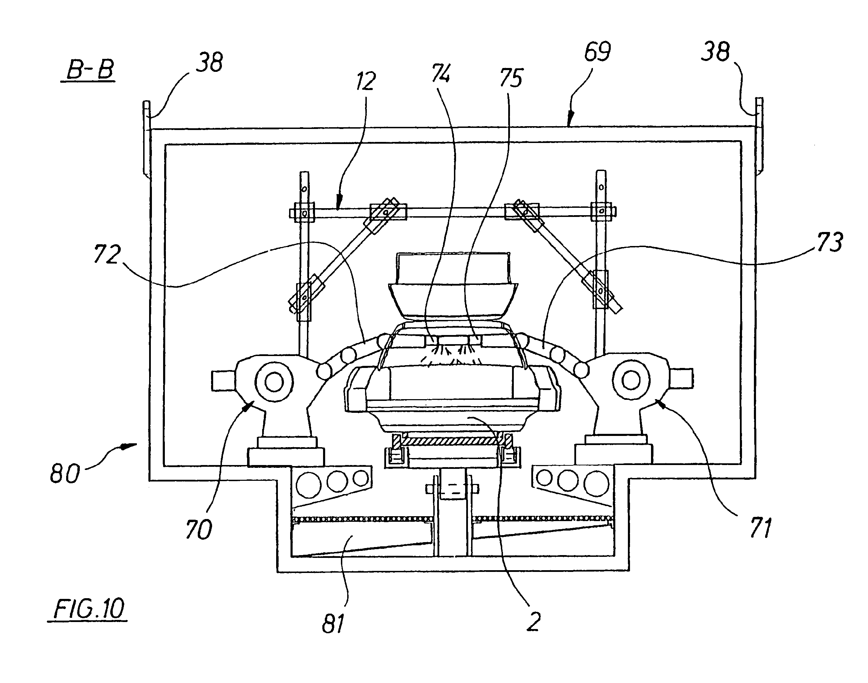

Wie dies insbesondere aus der Fig. 10 ersichtlich ist, die einen Schnitt durch das Reinigungssegment 69 entsprechend der Linie B-B der Fig. 8 darstellt, ragen die Roboterarme 72, 73 der Roboter 70, 71 jeweils in das Innere der Rohkarosserie 2. Dadurch gelangen die über die endseitigen Düsen 74, 75 der Roboterarme 72, 73 versprühten Reinigungsflüssigkeiten in das Innere der Rohkarosserie 2, um die dortigen Verunreinigungen zu beseitigen. Auch in der Innenreinigungsanlage 68 können unterschiedliche Reinigungsflüssigkeiten nacheinander in unterschiedlichen Reinigungsstufen aufgebracht werden. Die Roboter 70, 71 werden dabei nach jedem Sprühvorgang so umgeschaltet, daß über die Düsen 74, 75 Trocknungsluft ausgeblasen wird. Dadurch wird eine zunehmende Vermischung der einzelnen Reinigungsmittel entsprechend einer Abtropfstrecke vermieden.

Um ein vollständiges Ablaufen der Reinigungsmedien aus der Rohkarosserie 2 zu gewährleisten, ist ein Rollenbahnteil 77 des Reinigungssegments 69 auf einer mittleren Querachse 78 schwenkbar gelagert und durch einen Luftzylinder 79 verschwenkbar, wie dies in den Fig. 12 und 13 dargestellt ist. Dabei ist in der Fig. 12 das Rollenbahnteil 77 in einer Nicht-Kippstellung und in der Fig. 13 in einer Kippstellung dargestellt.

Die ablaufenden Reinigungsflüssigkeiten werden im unteren Reinigungssegmentbereich 80 in einer Auffangwanne 81 gesammelt, die im Aufbau derjenigen der Reinigungsanlage 3 entspricht. Für die unterschiedlichen Reinigungsflüssigkeiten können analog zur Außenreinigungsanlage 45 mehrere Auffangbehälter gesteuert unterhalb eines Wannenstutzens der Auffangwanne 81 verfahrbar angeordnet sein, was hier jedoch nicht dargestellt ist.

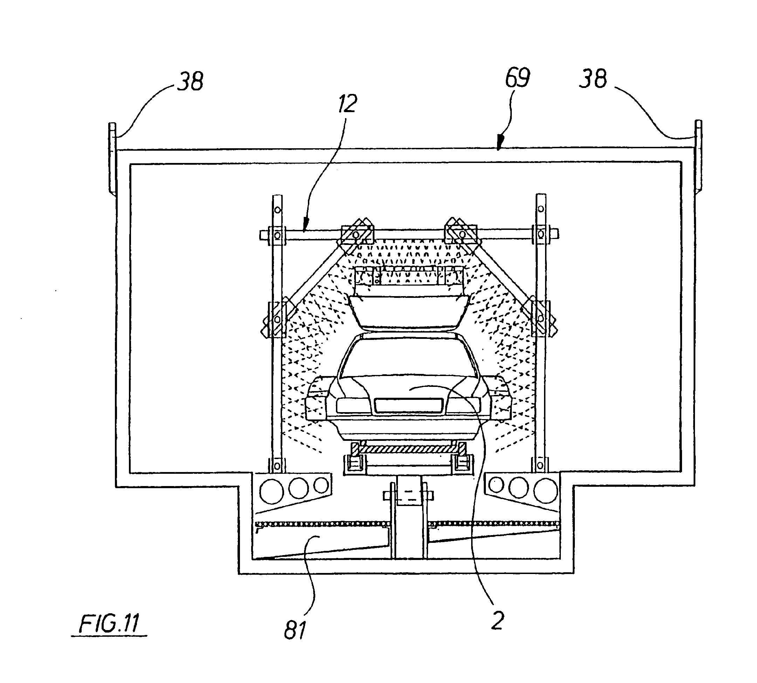

Den Robotern 70, 71 ist in dem Reinigungssegment 69 ein Düsenring 12 nachgeschaltet, der im Aufbau denjenigen der Außenreinigungsanlage 3 entspricht. Mit diesem Düsenring 12 können die im Rahmen der Nacharbeit entstandenen Außenhautverschmutzungen von der Rohkarosserie 2 abgewaschen werden, wie dies in der Fig. 11 dargestellt ist.

Die Innenreinigungsanlage 68 umfaßt weiterhin ein sich unmittelbar an das Reinigungssegment 69 anschließendes Trocknungs- und Abtropfsegment 83. Dort werden die Rohkarosserien 2 z. B. über hier nicht dargestellte Warmluftdüsen vor dem Zuführen zu einer Lackiererei vollständig getrocknet. Zudem ist hier, wie in der Fig. 8 mit dem Pfeil 84 angedeutet, eine Ausschleusungsmöglichkeit für manuelle Tätigkeiten gegeben.

Bei langen Taktzeiten, können die beiden Roboter 70, 71 in einer alternativen Ausführungsform einer Innenreinigungsanlage auch durch Werker ersetzt werden.

Die Steuerung einer derartigen Reinigungsanlage 1, insbesondere der Düsenringe 12 und/oder der Roboter 46, 47, 70, 71 ist relativ komplex, so daß eine hier nicht dargestellte Rechneranlage eine Steuerung nach einem jeweils abgelegten, karosseriespezifischen Programm vornimmt. Zum zeitrichtigen Start des jeweiligen, karosseriespezifischen Reinigungsprogramms werden dazu über im Bereich der Reinigungsanlage 1 angeordnete Sensoren der jeweilige Karosserietyp sowie der Anfang einer Rohkarosserie 2 bestimmt.

## Patentansprüche

1. Verfahren zur Herstellung einer Fahrzeugkarosserie,
wobei in einem Verfahrensschritt in einer Rohbauanlage eine Rohkarosserie (2) hergestellt wird, und
in einem weiteren Verfahrensschritt die Rohkarosserie (2) einer Lackieranlage, die Reinigungssysteme, insbesondere eingangsseitige Entfettungssysteme enthält, zugeführt und dort lackiert wird,
**dadurch gekennzeichnet,**
**dass** in einem weiteren, dazwischenliegenden Verfahrensschritt die Rohkarosserie (2) zwischen der Rohbauanlage und der Lackieranlage in einer Reinigungsanlage (1) gereinigt und damit Verunreinigungen der Rohkarosserie (2) vor deren Eintritt in die Lackieranlage beseitigt werden, und
**dass** der Verfahrensschritt der Reinigung der Rohbaukarosserie (2) aufgeteilt ist in einen Verfahrensschritt der Außenreinigung in einer Außenreinigungsanlage (3; 45) und einen nachfolgenden Verfahrensschritt der Innenreinigung in einer Innenreinigungsanlage (68).

2. Verfahren nach Anspruch 1, **dadurch gekennzeichnet, dass** in einem weiteren Verfahrensschritt nach dem Reinigen der Rohkarosserie (2) in der Reinigungsanlage (1) die Karosserieaußenhaut auf Oberflächenfehler hin inspiziert und solche erkannt, bevorzugt automatisiert erkannt und markiert werden und ggf. nachgearbeitet werden.

3. Verfahren nach Anspruch 1, **dadurch gekennzeichnet, dass** der Verfahrensschritt der Innenreinigung nach den Verfahrensschritten der Außenreinigung und der Erkennung und ggf. Nacharbeitung von Oberflächenfehlern der Karosserieaußenhaut erfolgt und zusätzlich in einem nachgeordneten Verfahrensschritt, bevorzugt in der Innenreinigungsanlage (68) eine weitere Außenhautreinigung zur Beseitigung von durch eine Nacharbeitung von Oberflächenfehlern auftretenden Verunreinigungen erfolgt.

4. Verfahren nach Anspruch 1, **dadurch gekennzeichnet, dass** bei der Außenreinigung und/oder bei der Innenreinigung nacheinander auf die Rohkarosserie (2) Reinigungsflüssigkeiten, nämlich ein flüssiger Reiniger, Betriebswasser und VE-Wasser (vollentkalktes Wasser) aufgebracht werden.

5. Verfahren nach Anspruch 4, **dadurch gekennzeichnet, dass** der flüssige Reiniger, das Betriebswasser und das VE-Wasser nach dem Aufbringen und Ablaufen von der Rohkarosserie (2) zur Vermeidung einer gegenseitigen Vermischung getrennt aufgefangen und für eine Mehrfachverwendung gesammelt werden, wobei zwischen der jeweiligen Aufbringung Abtropfzeiten, bevorzugt in Verbindung mit Weitertransportzeiten eingeschaltet werden.

6. Vorrichtung zur Durchführung von Verfahren nach einem der Ansprüche 1 bis 5, **dadurch gekennzeichnet,**
**dass** eine Reinigungsanlage (1) vorgesehen ist, die eine Außenreinigungsanlage (3; 45) und eine Innenreinigungsanlage (68) umfasst, und die jeweils
aus wenigstens einer Förderbahn (7) zum Transport der Rohkarosserien (2) durch die Reinigungsanlagen (3; 45; 68),
aus im Verlauf der Förderbahn (7) aufeinanderfolgende Sprüh- und Wascheinrichtungen (12; 46, 47; 70, 71) zur Aufbringung der Reinigungsflüssigkeiten,
aus zugeordneten Auffangwannen (14; 54; 81) für die unterschiedlichen Reinigungsflüssigkeiten, und ggf.
aus einer Trocknereinrichtung (23, 24; 49; 83) bestehen.

7. Vorrichtung nach Anspruch 6, **dadurch gekennzeichnet, dass** die Sprüh- und Wascheinrichtungen als die Rohkarosserie (2) zumindest weitgehend in einer Querebene umgebende Düsenringe (12) und/oder als programmierbare Roboter (46, 47; 70, 71) ausgebildet sind.

8. Vorrichtung nach Anspruch 7, **dadurch gekennzeichnet, dass** die unterschiedlichen Reinigungsflüssigkeiten jeweils nacheinander durch wenigstens einen Roboter (46, 47; 70, 71) gesteuert aufbringbar sind und entsprechend am Ort der Aufbringung das Auffangen und Sammeln der Reinigungsflüssigkeiten durch eine Wanne (54) mit einer umschaltbaren Ablaufverteilung (58, 59, 60) zur Trennung der unterschiedlichen Reinigungsflüssigkeiten erfolgt.

9. Vorrichtung nach Anspruch 7 oder Anspruch 8, **dadurch gekennzeichnet, dass** der wenigstens eine Roboter (46, 47; 70, 71) seitlich entlang einer zu reinigenden Rohkarosserie (2) auf Führungsschienen gesteuert verfahrbar ist und einen gesteuert verfahrbaren Arm (50, 51; 72, 73) mit endseitigen Düsen (52, 53; 74, 75) zur Aufbringung der Reinigungsflüssigkeiten aufweist.

10. Vorrichtung nach einem der Ansprüche 7 bis 9, **dadurch gekennzeichnet,**
**dass** die Steuerung der Reinigungsanlage (1), insbesondere der Düsenringe (12) und/oder der Roboter (46, 47; 70, 71) durch eine Rechneranlage nach einem jeweils abgelegten, karosseriespezifischen Programm erfolgt, und
**dass** durch Sensoren der jeweilige Karosserietyp und der Anfang einer Karosserie (2) zum Start des Reinigungsvorgangs detektiert werden.

11. Vorrichtung nach einem der Ansprüche 6 bis 10, **dadurch gekennzeichnet, dass** ein Rollenbahnteil (77), auf dem eine Rohkarosserie (2) steht, in der Reinigungsanlage (1), zumindest in der Innenreinigungsanlage (68) kippbar ist, so dass Reinigungsflüssigkeit aus dem Innenbereich der Rohkarosserie (2) abläuft.

12. Vorrichtung nach Anspruch 11, **dadurch gekennzeichnet, dass** das Rollenbahnteil (77) auf einer mittleren Querachse (78) schwenkbar gelagert ist und durch einen Arbeitszylinder (79), bevorzugt durch einen Luftzylinder verschwenkbar ist.

13. Vorrichtung nach einem der Ansprüche 6 bis 12, **dadurch gekennzeichnet, dass** die Förderbahn (7) eine kontinuierlich angetriebene Rollenbahn ist.

14. Vorrichtung nach einem der Ansprüche 6 bis 13, **dadurch gekennzeichnet, dass** die Reinigungsanlage (1) in Modulbauweise als Container aus Segmenten (8, 10, 17, 18, 20, 21, 22, 23, 24, 25; 48, 49; 69, 83), bevorzugt aus unterschiedlich langen Segmenten (8, 10, 17, 18, 20, 21, 22, 23, 24, 25; 48, 49; 69, 83) aufgebaut ist, die die Förderbahn (7) und/oder Sprüh- und Wascheinrichtungen (12; 46, 47; 70, 71) und/oder Auffangwannen (14; 54; 81) und/oder Abtropfstrecken (17, 20, 22) und/oder Trockeneinrichtungen (23, 24; 49; 83) enthalten.

15. Vorrichtung nach Anspruch 14, **dadurch gekennzeichnet, dass** die Segmentinnenbereiche voneinander zumindest teilweise durch Abschottungen (9) getrennt sind, die eine Rohkarosserie (2) möglichst eng umgeben.

16. Vorrichtung nach Anspruch 14 oder Anspruch 15, **dadurch gekennzeichnet, dass** die Segmente (8, 10, 17, 18, 20, 21, 22, 23, 24, 25; 48, 49; 69, 83) in Längsrichtung mit in einer Vertikalebene liegenden Anlageflanschen (29, 30) aneinandergrenzen und dort miteinander verschraubt sind.

17. Vorrichtung nach einem der Ansprüche 14 bis 16, **dadurch gekennzeichnet,**
**dass** wenigstens ein Teil der Segmente (8, 10, 17, 18, 20, 21, 22, 23, 24, 25; 48, 49; 69, 83) zudem aus Untersegmenten (37) und Obersegmenten (36) an etwa horizontalen Anlageflanschen (35) zusammengesetzt sind, wobei
die Obersegmente (36) bevorzugt die Förderbahn (7) und die Sprüh- und Wascheinrichtung (12; 46, 47; 70, 71) enthalten und die Untersegmente (37) Auffangwannen (14; 54; 81) und zugehörige Ablaufsteuerelemente (15) enthalten.

## Claims

1. Method for manufacturing a vehicle bodywork, wherein in a process step in a body plant, a body shell (2) is manufactured, and in a further process step the body shell (2) is passed to a painting plant which contains cleaning systems, in particular on the entry side, degreasing systems, and is painted there, **characterised in that** in a further intermediate process step, the body shell (2) is cleaned in a cleaning system (1) between the body plant and the painting plant and dirt is thereby removed from the body shell (2) before its entry into the painting plant, and that the process step of cleaning the body shell (2) is subdivided into a process step of exterior cleaning in an exterior cleaning system (3; 45) and a subsequent process step of interior cleaning in an interior cleaning system (68).

2. Method according to claim 1, **characterised in that** in a further process step, after cleaning the body shell (2) in the cleaning system (1), the bodywork outer skin is inspected for surface faults, said faults are recognised, preferably automatically, and are marked and possibly rectified.

3. Method according to claim 1, **characterised in that** the process step of interior cleaning takes place following the process step of exterior cleaning and recognition and possibly rectification of surface faults in the bodywork outer skin and additionally, in a subsequent process step, preferably in the interior cleaning system (68), a further exterior skin cleaning process takes place for removing dirt arising during any rectification of surface faults.

4. Method according to claim 1, **characterised in that** during the exterior cleaning and/or interior cleaning, cleaning fluids, specifically a liquid cleaner, industrial water and fully decalcified water are applied to the body shell (2) one after the other.

5. Method according to claim 4, **characterised in that** the liquid cleaner, the industrial water and the fully decalcified water are separately caught after application onto and running off the body shell (2) in order to avoid mutual mixing and are collected for reuse, wherein between the respective applications, drip-drying times are included, preferably in conjunction with conveying times.

6. Device for carrying out the method according to one of the claims 1 to 5, **characterised in that** a cleaning system (1) is provided which comprises an exterior cleaning system (3; 45) and an interior cleaning system (68), each of which comprises at least one conveying path (7) for transporting the body shells (2) through the cleaning systems (3; 45; 68), spraying and washing apparatus (12; 46, 47; 70, 71) for applying the cleaning fluids, said apparatus sequentially arranged along the conveying path (7), allocated collecting troughs (14; 54; 81) for the different cleaning fluids, and possibly a drying apparatus (23, 24; 49; 83) .

7. Device according to claim 6, **characterised in that** the spraying and washing apparatus is designed as nozzle rings (12) at least substantially surrounding the body shell (2) in a transverse plane and/or as programmable robots (46, 47; 70, 71).

8. Device according to claim 7, **characterised in that** the different cleaning fluids can be applied one after the other by at least one robot (46, 47; 70, 71) in controlled manner and correspondingly, the catching and collecting of the cleaning fluids takes place at the site of application with a trough (54) having a switchable outlet distribution system (58, 59, 60) for separating the different cleaning fluids.

9. Device according to claim 7 or 8, **characterised in that** the at least one robot (46, 47; 70, 71) is movable in controlled manner laterally on guide rails along a body shell (2) to be cleaned and has an arm (50, 51; 72, 73) movable in controlled manner and with nozzles (52, 53; 74, 75) on its end for applying the cleaning fluids.

10. Device according to one of the claims 7 to 9, **characterised in that** the control of the cleaning system (1), in particular of the nozzle rings (12) and/or of the robots (46, 47; 70, 71), takes place through a computer system according to a stored program specific to the bodywork, and that by means of sensors, the respective bodywork type and the start of a body shell (2) are detected at the start of the cleaning process.

11. Device according to one of the claims 6 to 10, **characterised in that** a roller conveyor section (77) on which a body shell (2) stands is tiltable in the cleaning system (1), at least in an interior cleaning system (68), so that cleaning fluid runs out of the interior region of the body shell (2) .

12. Device according to claim 11, **characterised in that** the roller conveyor section (77) is pivotably mounted on a central transverse axis (78) and is tiltable by an actuating cylinder (79), preferably a pneumatic cylinder.

13. Device according to one of the claims 6 to 12, **characterised in that** the conveying path (7) is a continuously driven roller conveyor.

14. Device according to one of the claims 6 to 13, **characterised in that** the cleaning system (1) is constructed in modular manner as a container made from segments (8, 10, 17, 18, 20, 21, 22, 23, 24, 25; 48, 49; 69, 83), preferably from segments (8, 10, 17, 18, 20, 21, 22, 23, 24, 25; 48, 49; 69, 83) of different length, which include the conveying path (7) and/or the spraying and washing apparatus (12; 46, 47; 70, 71) and/or collecting troughs (14; 54; 81) and/or drip-drying sections (17, 20, 22) and/or drying apparatus (23, 24; 49; 83).

15. Device according to claim 14, **characterised in that** the segment internal regions are at least partially separated from each other by bulkheads (9) which surround a body shell (2) as closely as possible.

16. Device according to claim 14 or 15, **characterised in that** the segments (8, 10, 17, 18, 20, 21, 22, 23, 24, 25; 48, 49; 69, 83) adjoin each other in the longitudinal direction with contact flanges (29, 30) lying in a vertical plane and are screwed together there.

17. Device according to one of the claims 14 to 16, **characterised in that** at least part of the segments (8, 10, 17, 18, 20, 21, 22, 23, 24, 25; 48, 49; 69, 83) are also made up from lower segments (37) and upper segments (36) with approximately horizontal contact flanges (35), wherein the upper segments (36) preferably contain the conveying path (7) and the spraying and washing apparatus (12; 46, 47; 70, 71) and the lower segments (37) contain collecting troughs (14; 54; 81) and associated outlet control elements (15) .

## Revendications

1. Procédé pour fabriquer une carrosserie de véhicule, dans lequel :
- une carrosserie brute (2) est fabriquée au cours d'une étape de procédé dans une installation d'ébauchage ; et
- la carrosserie brute (2) est amenée au cours d'une autre étape de procédé vers une chaîne de laquage qui contient des systèmes de nettoyage, en particulier des systèmes de dégraissage du côté entrée, et y est peinte,
**caractérisé en ce que** :
- la carrosserie brute (2) est nettoyée au cours d'une autre étape de procédé intermédiaire dans une installation de nettoyage (1) entre l'installation d'ébauchage et la chaîne de laquage et ainsi des impuretés de la carrosserie brute (2) sont éliminées avant son entrée dans la chaîne de laquage ; et
- l'étape de procédé du nettoyage de la carrosserie brute (2) est subdivisée en une étape de procédé du nettoyage extérieur dans une installation de nettoyage extérieur (3 ; 45) et une étape de procédé suivante de nettoyage intérieur dans une installation de nettoyage intérieur (68).

2. Procédé selon la revendication 1, **caractérisé en ce que**, au cours d'une autre étape de procédé après le nettoyage de la carrosserie brute (2) dans l'installation de nettoyage (1), la peau extérieure de carrosserie est inspectée quant à des défauts surfaciques et de tels défauts sont reconnus, de préférence reconnus de manière automatisée, et marqués, et le cas échéant retouchés.

3. Procédé selon la revendication 1, **caractérisé en ce que** l'étape de procédé du nettoyage intérieur a lieu après les étapes de procédé du nettoyage extérieur et de la détection et le cas échéant de la retouche des défauts surfaciques de la peau extérieure de carrosserie et **en ce qu'**un autre nettoyage de peau extérieure a lieu en supplément dans une étape de procédé ultérieure, de préférence dans l'installation de nettoyage intérieur (68), pour éliminer les impuretés surgissant à la suite d'une retouche des défauts surfaciques.

4. Procédé selon la revendication 1, **caractérisé en ce que** des liquides de nettoyage, à savoir un agent de nettoyage liquide, de l'eau industrielle et de l'eau ED (eau entièrement détartrée) sont apposés l'un après l'autre sur la carrosserie brute (2) pendant le nettoyage extérieur et/ou pendant le nettoyage intérieur.

5. Procédé selon la revendication 4, **caractérisé en ce que** l'agent de nettoyage liquide, l'eau industrielle et l'eau ED sont recueillis séparément après l'apposition et l'écoulement de la carrosserie brute (2) pour éviter un mélange réciproque et sont collectés pour une utilisation multiple sachant que des temps d'égouttage, de préférence en liaison avec des temps de transport, sont enclenchés entre les appositions respectives.

6. Dispositif pour exécuter le procédé selon l'une des revendications 1 à 5, **caractérisé en ce qu'**une installation de nettoyage (1) est prévue, laquelle comporte une installation de nettoyage extérieur (3 ; 45) et une installation de nettoyage intérieur (68) et laquelle est constituée respectivement :
- d'au moins une trajectoire de convoyage (7) pour transporter les carrosseries brutes (2) à travers les installation de nettoyage (3 ; 45 ; 68) ;
- de dispositifs de pulvérisation et de lavage (12 ; 46 ; 47 ; 70 ; 71), successifs dans le parcours de la trajectoire de convoyage (7) pour apposer les liquides de nettoyage ;
- de bacs de recueil correspondants (14 ; 54 ; 81) pour les différents liquides de nettoyage ; et le cas échéant
- d'un dispositif à séchoir (23 ; 24 ; 49 ; 83).

7. Dispositif selon la revendication 6, **caractérisé en ce que** les dispositifs de pulvérisation et de lavage sont réalisés sous forme de bagues de buse (12) entourant la carrosserie brute (2) au moins en grande partie dans un plan transversal et/ou en tant que robots programmables (46 ; 47 ; 70 ; 71).

8. Dispositif selon la revendication 7, **caractérisé en ce que** les différents liquides de nettoyage peuvent être apposés respectivement l'un après l'autre de manière commandée par au moins un robot (46 ; 47 ; 70 ; 71) et **en ce que** le recueil et la collecte des liquides de nettoyage ont lieu de manière correspondante sur le lieu de l'apposition par l'intermédiaire d'un bac (54) comportant un distributeur d'écoulement commutable (58 ; 59 ; 60) pour séparer les différents liquides de nettoyage.

9. Dispositif selon la revendication 7 ou la revendication 8, **caractérisé en ce qu'**au moins un robot (46 ; 47 ; 70 ; 71) peut être déplacé latéralement de manière commandée sur des rails de guidage, le long d'une carrosserie brute à nettoyer (2), et présente un bras (50 ; 51 ; 72 ; 73) pouvant être déplacé de manière commandée et comportant des buses terminales (52 ; 53 ; 74 ; 75) pour apposer les liquides de nettoyage.

10. Dispositif selon l'une des revendications 7 à 9, **caractérisé en ce que** :
- la commande de l'installation de nettoyage (1), en particulier des bagues de buse (12) et/ou des robots (46 ; 47 ; 70 ; 71) a lieu par l'intermédiaire d'une installation informatique selon un programme respectivement mémorisé et spécifique à la carrosserie ; et
- le type de carrosserie respectif et le début d'une carrosserie (2) sont détectés par des capteurs pour démarrer l'opération de nettoyage.

11. Dispositif selon l'une des revendications 6 à 10, **caractérisé en ce qu'**une partie de trajectoire à rouleaux (77) sur laquelle se trouve la carrosserie brute (2) peut être basculée dans l'installation de nettoyage (1), tout du moins dans l'installation de nettoyage intérieur (68), de sorte que du liquide de nettoyage s'écoule de la zone intérieure de la carrosserie brute (2).

12. Dispositif selon la revendication 11, **caractérisé en ce que** la partie de trajectoire à rouleaux (77) est montée avec faculté de pivotement sur un axe transversal médian (78) et peut être pivotée par l'intermédiaire d'un cylindre de travail (79), de préférence un cylindre à air.

13. Dispositif selon l'une des revendications 6 à 12, **caractérisé en ce que** la trajectoire de convoyage (7) est une trajectoire à rouleaux entraînée en continu.

14. Dispositif selon l'une des revendications 6 à 13, **caractérisé en ce que** l'installation de nettoyage (1) est fabriquée en construction modulaire comme container à partir de segments (8 ; 10 ; 17 ; 18 ; 20 ; 21 ; 22 ; 23 ; 24 ; 25 ; 48 ; 49 ; 69 ; 83), de préférence à partir de segments d'une longueur différente 8 ; 10 ; 17 ; 18 ; 20 ; 21 ; 22 ; 23 ; 24 ; 25 ; 48 ; 49 ; 69 ; 83), qui contiennent la trajectoire de convoyage (7) et/ou les dispositifs de pulvérisation et de lavage (12 ; 46 ; 47 ; 70 ; 71) et/ou les bacs de recueil (14 ; 54 ; 81) et/ou des parcours d'égouttage (17 ; 20 ; 22) et/ou des dispositifs de séchage (23 ; 24 ; 49 ; 83).

15. Dispositif selon la revendication 14, **caractérisé en ce que** les zones intérieures de segment sont séparées l'une de l'autre au moins partiellement par des cloisonnements (9) qui entourent une carrosserie brute (2) le plus étroitement possible.

16. Dispositif selon la revendication 14 ou la revendication 15, **caractérisé en ce que** les segments (8 ; 10 ; 17 ; 18 ; 20 ; 21 ; 22 ; 23 ; 24 ; 25 ; 48 ; 49 ; 69 ; 83) viennent se limiter l'un à l'autre en direction longitudinale par des brides de contact (29 ; 30) disposées dans un plan vertical et sont vissés l'un à l'autre à cet endroit.

17. Dispositif selon l'une des revendications 14 à 16, **caractérisé en ce qu'**au moins une partie des segments (8 ; 10 ; 17 ; 18 ; 20 ; 21 ; 22 ; 23 ; 24 ; 25 ; 48 ; 49 ; 69 ; 83) sont constitués en plus de segments inférieurs (37) et de segments supérieurs (36) sur des brides de contact approximativement horizontales (35), sachant que les segments supérieurs (36) contiennent de préférence la trajectoire de convoyage (7) et les dispositifs de pulvérisation et de lavage (12 ; 46 ; 47 ; 70 ; 71) et que les segments inférieurs (37) contiennent les bacs de recueil (14 ; 54 ; 81) et les éléments de commande séquentielle associés (15).
